# EUROPEAN PATENT APPLICATION

(11) **EP 4 507 271 A1**
(43) Date of publication of application: **12.02.2025**
(21) Application number: 23795188.4
(22) Date of filing: 20.04.2023
(51) Int. Cl.: H04L 45/74

(54) **COMMUNICATION METHOD AND APPARATUS, STORAGE MEDIUM, AND PROGRAM PRODUCT**

(30) Priority: 25.04.2022 CN 202210442155
(71) Applicant: Huawei Technologies Co., Ltd., Shenzhen, Guangdong 518129 (CN)
(72) Inventor: SUN, Fei, Shenzhen, Guangdong 518129 (CN); ZHU, Yuanping, Shenzhen, Guangdong 518129 (CN); SHI, Yulong, Shenzhen, Guangdong 518129 (CN)
(74) Representative: Körber, Martin Hans
(86) International application number: PCT/CN2023/089556
(87) International publication number: WO 2023/207755

(57) **Abstract**

A communication method and apparatus, a storage medium, and a program product are provided. A first node obtains a backhaul adaptation protocol (backhaul adaptation protocol, BAP) routing identifier of a data packet and a topology type indicator of a topology that the data packet needs to pass through. The first node determines a source IP address based on the BAP routing identifier, the topology type indicator, and a correspondence between a topology type and an internet protocol (internet protocol, IP) address. In this way, the first node can accurately determine the source IP address. This improves data transmission efficiency.

## Description

This application claims priority to Chinese Patent Application No. 202210442155.5, filed with the China National Intellectual Property Administration on April 25, 2022 and entitled "COMMUNICATION METHOD AND APPARATUS, STORAGE MEDIUM, AND PROGRAM PRODUCT", which is incorporated herein by reference in its entirety.

### TECHNICAL FIELD

This application relates to the field of communication technologies, and in particular, to a communication method and apparatus, a storage medium, and a program product.

### BACKGROUND

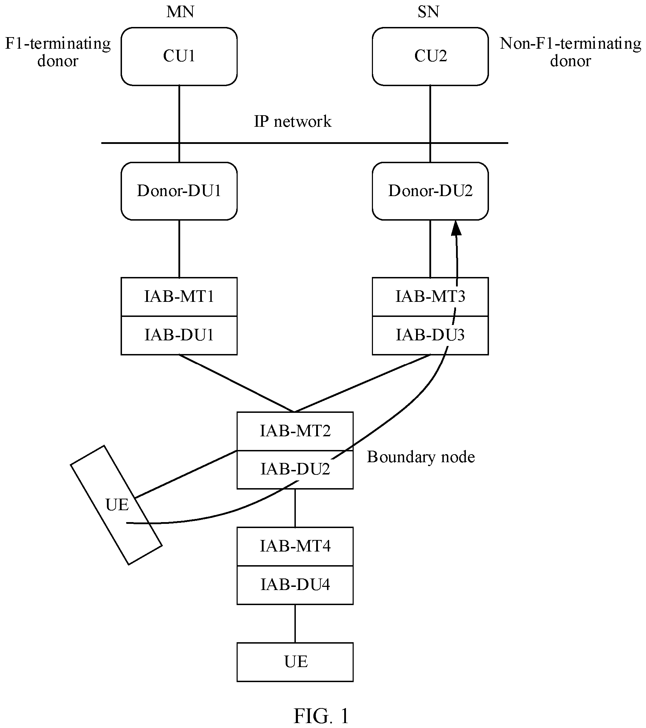

FIG. 1 is a diagram of sending uplink data in a topology redundancy (topology redundancy) scenario. Although a donor-distributed unit (Donor-DU) 1 and a donor-DU2 belong to topologies controlled by different donor-central units (Donor-CUs), in different topologies, backhaul adaptation protocol (backhaul adaptation protocol, BAP) addresses corresponding to the donor-DU1 and the donor-DU2 may be the same. In this case, according to a method specified in a current protocol for selecting an internet protocol (internet protocol, IP) address by a boundary node (boundary node), when the boundary node selects a source IP address for an uplink data packet based on a BAP address in an uplink mapping (UL mapping) rule, the selected source IP address may not match a real destination BAP address of the uplink data packet. As a result, the uplink data packet is filtered out at a donor-DU, leading to packet loss. For example, in FIG. 1, a CU1 is a master node (master node, MN), and a CU2 is a secondary node (secondary node, SN). The CU1 is an F1-terminating donor (F1-terminating donor) of a boundary node (IAB node 2), and the CU2 is a non-F1-terminating donor (Non-F1-terminating donor) of the boundary node.

Specifically, it is assumed that a BAP address of the donor-DU1 is X, and a BAP address of the donor-DU2 is also X. IP addresses that are in a topology of the CU1 and that are allocated by the donor-DU1 to the boundary node include: IP1, IP2, and IP3, and there is a correspondence between these IP addresses {IP1, IP2, IP3} and the BAP address X of the donor-DU1. IP addresses that are in a topology of the CU2 and that are allocated by the donor-DU2 to the boundary node include: IP4 and IP5, and there is a correspondence between these IP addresses {IP4, IP5} and the BAP address X of the donor-DU2.

It is assumed that UE1 sends an uplink data packet to the donor-CU2. When the boundary node selects a source IP address, because the BAP addresses of the donor-DU1 and the donor-DU2 are the same and are both X, based on the existing source IP address selection method, the source IP address selected by the boundary node may be IP2 (allocated by the Donor-DU1). When the data packet arrives at the donor-DU2, because the source IP address of the data packet is IP2, the donor-DU2 assumes that the source IP address of the data packet is not allocated by the donor-DU2. As a result, the donor-DU2 filters out the data packet, leading to packet loss.

### SUMMARY

This application provides a communication method and apparatus, a storage medium, and a program product, to avoid or reduce packet loss and improve data transmission reliability.

According to a first aspect, a communication method is provided. The method includes: obtaining a BAP routing identifier of a data packet and a topology type indicator of a topology that the data packet needs to pass through; and determining a source IP address based on the BAP routing identifier, the topology type indicator, and a correspondence between a topology type and an internet protocol IP address.

In this aspect, a first node (for example, a boundary node in a dual connectivity scenario) obtains the BAP routing identifier of the data packet and the topology type indicator of the topology that the data packet needs to pass through; and determines the source IP address based on the BAP routing identifier, the topology type indicator, and the correspondence between the topology type and the IP address. In this way, the first node can accurately determine the source IP address. This improves data transmission efficiency.

In a possible implementation, the determining a source IP address based on the BAP routing identifier, the topology type indicator, and a correspondence between a topology type and an IP address includes: determining a topology type corresponding to a master node and a topology type corresponding to a secondary node; determining, based on the topology type indicator, the topology type corresponding to the master node, the topology type corresponding to the secondary node, and the correspondence between the topology type and the IP address, a first IP address set corresponding to the master node and a second IP address set corresponding to the secondary node; and selecting the source IP address from the first IP address set or the second IP address set based on a BAP address in the BAP routing identifier.

In this implementation, the first IP address set corresponding to the master node and the second IP address set corresponding to the secondary node may be first determined based on the topology type corresponding to the master node and the topology type corresponding to the secondary node; and then the source IP address is selected from the first IP address set or the second IP address set based on the BAP address. This can avoid or reduce packet loss caused when an incorrect source IP address is selected, a destination DU determines, when receiving a data packet, that a source IP address in a header of the data packet is not allocated by the destination DU, and therefore filters out the data packet.

In another possible implementation, the method further includes: receiving first configuration information, where the first configuration information includes a first information element and/or a second information element, the first information element includes the first IP address set, and the second information element includes the second IP address set; and determining, based on the first configuration information, the first IP address set as an IP address set corresponding to the master node, and determining the second IP address set as an IP address set corresponding to the secondary node.

In this implementation, the IP address sets respectively corresponding to the master node and the secondary node may be determined based on IP address sets configured by the master node and the secondary node in different information elements. This improves accuracy of IP address selection.

In still another possible implementation, the method further includes: setting up the correspondence between the topology type and the IP address based on the topology type corresponding to the master node, the topology type corresponding to the secondary node, the first IP address set corresponding to the master node, and the second IP address set corresponding to the secondary node.

In this implementation, the first node may obtain the topology type corresponding to the master node and the topology type corresponding to the secondary node, and may set up a correspondence between one or more topology types and one or more IP addresses when determining the IP address sets respectively corresponding to the master node and the secondary node. The one or more IP addresses belong to the first IP address set or the second IP address set.

In still another possible implementation, the determining a source IP address based on the BAP routing identifier, the topology type indicator, and a correspondence between a topology type and an IP address includes: determining, based on the BAP routing identifier, a third IP address set corresponding to a BAP address in the BAP routing identifier; determining a topology type corresponding to a master node and a topology type corresponding to a secondary node; determining, from the third IP address set based on the topology type indicator, the topology type corresponding to the master node, the topology type corresponding to the secondary node, and the correspondence between the topology type and the IP address, a fourth IP address set corresponding to the master node and a fifth IP address set corresponding to the secondary node; and selecting the source IP address from the fourth IP address set or the fifth IP address set.

In this implementation, the third IP address set corresponding to the BAP address may be first determined. The third IP address set includes the fourth IP address set corresponding to the master node and the fifth IP address set corresponding to the secondary node. Then, the source IP address is selected from the fourth IP address set or the fifth IP address set from the third IP address set based on the topology type indicator, the topology type corresponding to the master node, the topology type corresponding to the secondary node, and the correspondence between the topology type and the IP address. This can avoid or reduce packet loss caused when an incorrect source IP address is selected, a destination DU determines, when receiving a data packet, that a source IP address in a header of the data packet is not allocated by the destination DU, and therefore filters out the data packet.

In still another possible implementation, the topology type includes an F1-terminating topology and a non-F1-terminating topology.

In still another possible implementation, the method further includes: adding the selected source IP address to a packet header of the data packet, and sending the data packet.

In this implementation, the data packet is sent based on the selected source IP address, so that data packet loss can be avoided or reduced, and data transmission accuracy is improved.

In still another possible implementation, the method further includes: selecting a destination IP address from the first IP address set or the second IP address set based on the BAP address in the BAP routing identifier; and sending the destination IP address.

In this implementation, after obtaining the BAP routing identifier of the data packet and the topology type indicator of the topology that the data packet needs to pass through, the first node may determine the destination IP address based on the BAP routing identifier, the topology type indicator, and the correspondence between the topology type and the IP address, and report the destination IP address. This improves downlink data transmission reliability.

According to a second aspect, a communication apparatus is provided. The communication apparatus may implement the method according to the first aspect. For example, the communication apparatus may be an IAB node. The foregoing method may be implemented by software, hardware, or hardware executing corresponding software.

In a possible implementation, the apparatus includes a processing unit. The processing unit is configured to obtain a backhaul adaptation protocol BAP routing identifier of a data packet and a topology type indicator of a topology that the data packet needs to pass through. The processing unit is further configured to determine a source IP address based on the BAP routing identifier, the topology type indicator, and a correspondence between a topology type and an internet protocol IP address.

Optionally, the processing unit is further configured to determine a topology type corresponding to a master node and a topology type corresponding to a secondary node. The processing unit is further configured to determine, based on the topology type indicator, the topology type corresponding to the master node, the topology type corresponding to the secondary node, and the correspondence between the topology type and the IP address, a first IP address set corresponding to the master node and a second IP address set corresponding to the secondary node. The processing unit is further configured to select the source IP address from the first IP address set or the second IP address set based on a BAP address in the BAP routing identifier.

Optionally, the apparatus further includes a transceiver unit. The transceiver unit is configured to receive first configuration information. The first configuration information includes a first information element and/or a second information element. The first information element includes the first IP address set, and the second information element includes the second IP address set. The processing unit is further configured to determine, based on the first configuration information, the first IP address set as an IP address set corresponding to the master node, and determine the second IP address set as an IP address set corresponding to the secondary node.

Optionally, the processing unit is further configured to set up the correspondence between the topology type and the IP address based on the topology type corresponding to the master node, the topology type corresponding to the secondary node, the first IP address set corresponding to the master node, and the second IP address set corresponding to the secondary node.

Optionally, the processing unit is further configured to determine, based on the BAP routing identifier, a third IP address set corresponding to a BAP address in the BAP routing identifier. The processing unit is further configured to determine a topology type corresponding to a master node and a topology type corresponding to a secondary node. The processing unit is further configured to determine, from the third IP address set based on the topology type indicator, the topology type corresponding to the master node, the topology type corresponding to the secondary node, and the correspondence between the topology type and the IP address, a fourth IP address set corresponding to the master node and a fifth IP address set corresponding to the secondary node. The processing unit is further configured to select the source IP address from the fourth IP address set or the fifth IP address set.

Optionally, the topology type includes an F1-terminating topology and a non-F1-terminating topology.

Optionally, the processing unit is further configured to add the selected source IP address to a packet header of the data packet. The transceiver unit is configured to send the data packet.

Optionally, the processing unit is further configured to select a destination IP address from the first IP address set or the second IP address set based on the BAP address in the BAP routing identifier. The transceiver unit is configured to send the destination IP address.

In another possible implementation, the communication apparatus includes a processor coupled to the memory. The processor is configured to support the apparatus in performing a corresponding function in the foregoing communication method. The memory is configured to be coupled to the processor, and stores a computer program (or computer-executable instructions) and/or data required for the apparatus. Optionally, the communication apparatus may further include a communication interface, configured to support communication between the apparatus and another network element, for example, data and/or signal sending or receiving. For example, the communication interface may be a transceiver, a circuit, a bus, a module, or a communication interface of another type. Optionally, the memory may be located inside the communication apparatus and integrated with the processor, or may be located outside the communication apparatus.

In another possible implementation, the foregoing communication apparatus includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method through a logic circuit or by executing code instructions. The transceiver apparatus may be a transceiver, a transceiver circuit, an interface circuit, or an input/output interface, and is configured to receive a signal from a communication apparatus other than the communication apparatus and transmit the signal to the processor, or send a signal from the processor to a communication apparatus other than the communication apparatus. When the communication apparatus is a chip, the transceiver apparatus is the transceiver circuit or the input/output interface.

When the foregoing communication apparatus is a chip, a sending unit may be an output unit, for example, an output circuit or a communication interface, and a receiving unit may be an input unit, for example, an input circuit or a communication interface. When the communication apparatus is a terminal, a sending unit may be a transmitter or a transmitter machine, and a receiving unit may be a receiver or a receiver machine.

According to a third aspect, a communication system is provided. The communication system includes a master node, a secondary node, a first donor-DU, a second donor-DU, and the communication apparatus according to the second aspect.

According to a fourth aspect, a computer-readable storage medium is provided. The computer-readable storage medium stores a computer program or instructions. When the program or the instructions are executed by a processor, the method according to any one of the aspects or the implementations of the first aspect is performed.

According to a fifth aspect, a computer program product is provided. When the computer program product is executed on a computing device, the method according to any one of the aspects or the implementations of the first aspect is enabled to be performed.

According to a sixth aspect, a circuit is provided. The circuit is coupled to a memory. The circuit is configured to perform the method according to any one of the aspects or the implementations of the first aspect. The circuit may include a chip circuit.

### BRIEF DESCRIPTION OF DRAWINGS

FIG. 1 is a diagram of sending uplink data in a topology redundancy scenario;
FIG. 2 is a diagram of a wireless relay scenario according to an embodiment of this application;
FIG. 3 is a diagram of a control plane protocol stack in an IAB network according to an embodiment of this application;
FIG. 4 is a diagram of a user plane protocol stack in an IAB network according to an embodiment of this application;
FIG. 5 is a diagram of a topology redundancy architecture according to an embodiment of this application;
FIG. 6 is a diagram of an IAB network architecture according to an embodiment of this application;
FIG. 7 is a schematic flowchart of a communication method according to an embodiment of this application;
FIG. 8 is a schematic flowchart of another communication method according to an embodiment of this application; and
FIG. 9 is a schematic flowchart of still another communication method according to an embodiment of this application;
FIG. 10 is a schematic flowchart of still another communication method according to an embodiment of this application;
FIG. 11 is a diagram of a structure of a communication apparatus according to an embodiment of this application; and
FIG. 12 is a diagram of a structure of another communication apparatus according to an embodiment of this application.

### DESCRIPTION OF EMBODIMENTS

The following describes embodiments of this application with reference to the accompanying drawings in embodiments of this application.

Several concepts that may be used in this application are first briefly described.

Integrated access and backhaul (integrated access and backhaul, IAB)

Compared with a 4th generation (4^{th} generation, 4G) mobile communication system, 5th generation (5^{th} generation, 5G) mobile communication poses stricter requirements on network performance indicators, for example, a capacity increased by 1000 times, a wider coverage requirement, and ultra-high reliability and ultra-low latency. Considering that high-frequency carrier frequency resources are abundant, in hotspot areas, to satisfy the requirement for an ultra-high capacity of 5G, high-frequency small cell networking becomes increasingly popular. High-frequency carriers have a poor propagation characteristic, are severely attenuated due to blocking, and have small coverage. Therefore, a large quantity of small cells need to be densely deployed. Accordingly, providing optical fiber backhaul for the large quantity of densely deployed small cells costs high and has great difficulties in construction. Therefore, there is a need for an economical and convenient backhaul solution. In addition, from the perspective of the wide coverage requirement, providing network coverage in some remote areas has high difficulties in optical fiber deployment and costs high. Therefore, there is also a need for a flexible and convenient access and backhaul solution. An IAB technology provides a solution to resolve the foregoing two problems, in which a wireless transmission solution of the IAB technology is applied to both access links (access link) and backhaul links (backhaul link, BL), to reduce optical fiber deployment.

In an IAB network, a relay node (relay node, RN), which is also referred to as an IAB node (IAB node), may provide a radio access service for user equipment (user equipment, UE). Service data of the UE is transmitted by the IAB node connected to an IAB donor (IAB donor) over a wireless backhaul link. In this application, the IAB donor may also be referred to as a donor node (donor node) or a donor base station (Donor gNodeB, DgNB). The IAB node includes a mobile termination (mobile termination, MT) part and a distributed unit (distributed unit, DU) part. When orienting to a parent node of the IAB node, the IAB node may be considered as a terminal device, that is, a role of the MT. When orienting to a child node of the IAB node (the child node may be another IAB node or common UE), the IAB node is considered as a network device, that is, a role of the DU. The donor base station DgNB may be an access network element having a complete base station function, or may be an access network element in a form in which a central unit (central unit, CU) and a distributed unit (distributed unit, DU) are separated. The donor base station is connected to a core network (for example, connected to a 5G core network (5G core, 5GC)) element that serves the UE, and provides a wireless backhaul function for the IAB node. For ease of description, the central unit of the donor node is briefly referred to as a donor-CU (or directly referred to as a CU), and the distributed unit of the donor node is briefly referred to as a donor-DU. The donor-CU may alternatively be in a form in which a control plane (control plane, CP) and a user plane (user plane, UP) are separated. For example, the CU may include one CU-CP and one (or more) CU-UP(s).

The IAB node is connected to the core network through the IAB donor. For example, in a 5G standalone (standalone, SA) architecture, the IAB node is connected to the 5GC through the IAB donor. In a dual connectivity (dual connectivity, DC) or multi-connectivity (multi-connectivity, MC) 5G architecture (for example, a non-standalone (non-standalone, NSA) scenario or an NR-DC scenario), on a primary path, the IAB node may be connected to an evolved packet core network (evolved packet core, EPC) through an evolved base station (evolved NodeB, eNB), or may be connected to the 5G core network through the IAB donor.

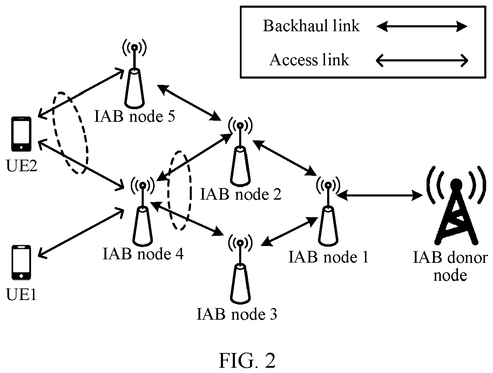

In the IAB network, one or more IAB nodes may be included on a transmission path between the UE and the IAB donor. Each IAB node needs to maintain a wireless backhaul link to the parent node and a wireless link to the child node. If the child node of the IAB node is the UE, there is a wireless access link between the IAB node and the child node (that is, the UE). If the child node of the IAB node is another IAB node, there is a wireless backhaul link between the IAB node and the child node (that is, the another IAB node). For example, FIG. 2 is a diagram of a wireless relay scenario according to an embodiment of this application. On a path "UE1 → IAB node 4 -> IAB node 3 -> IAB node 1 -> IAB donor", the UE1 accesses the IAB node 4 over a wireless access link, the IAB node 4 is connected to the IAB node 3 over a wireless backhaul link, the IAB node 3 is connected to the IAB node 1 over a wireless backhaul link, and the IAB node 1 is connected to the IAB donor over a wireless backhaul link.

In this embodiment of this application, an access IAB node is an IAB node accessed by the UE, and an intermediate IAB node is an IAB node that provides a wireless backhaul service for the UE or the IAB node. For example, still refer to FIG. 2. On the path "UE1 → IAB node 4 → IAB node 3 → IAB node 1 → IAB donor", the IAB node 4 is an access IAB node, and the IAB node 3 and the IAB node 1 are intermediate IAB nodes. It should be noted that an IAB node is an access IAB node for UE that accesses the IAB node; and an IAB node is an intermediate IAB node for UE that accesses another IAB node. Therefore, whether an IAB node is specifically an access IAB node or an intermediate IAB node is not fixed and needs to be determined based on a specific application scenario.

### Control plane protocol stack in the IAB network

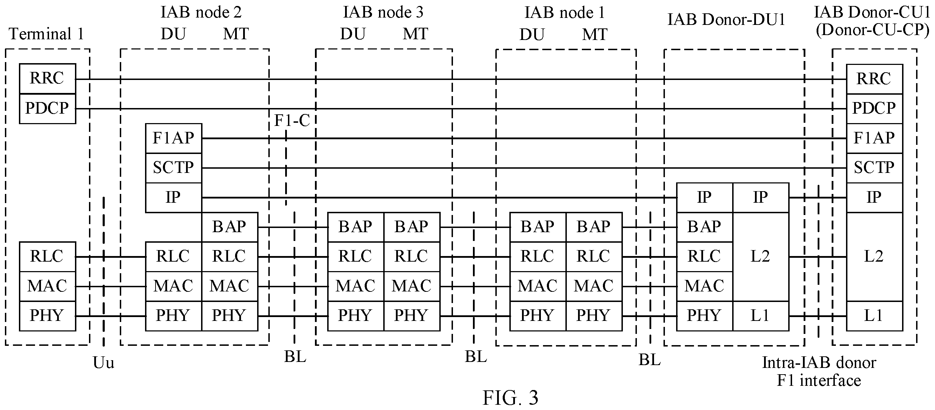

FIG. 3 is a diagram of a control plane protocol stack in an IAB network according to an embodiment of this application. A Uu interface is set up between UE1 and an IAB2-DU, and peer protocol layers include radio link control (radio link control, RLC) layers, media access control (media access control, MAC) layers, and physical layers (physical layers, PHYs). An F1-C interface is set up between the IAB2-DU and an IAB donor-CU1, and peer protocol layers include F1 application protocol (F1 application protocol, F1AP) layers and stream control transmission protocol (stream control transmission protocol, SCTP) layers. An IAB donor-DU1 and the IAB donor-CU1 are connected in a wired manner, and peer protocol layers include internet protocol (internet protocol, IP) layers, layers 2 (layers 2, L2s), and layers 1 (layers 1, L1s). BLs are set up between an IAB node 2 and an IAB node 3, between the IAB node 3 and an IAB node 1, and between the IAB node 1 and the IAB donor-DU1, and peer protocol layers include backhaul adaptation protocol (backhaul adaptation protocol, BAP) layers, RLC layers, MAC layers, and PHY layers. In addition, peer RRC layers and PDCP layers are set up between the UE1 and the IAB donor-CU1. Peer IP layers are set up between the IAB2-DU and the IAB donor-DU1.

It can be learned that, compared with a control plane protocol stack in a single air interface, in the control plane protocol stack in the IAB network, a DU of the access IAB node implements a function of a gNB-DU of the single air interface (that is, a function of setting up peer RLC layers, MAC layers, and PHY layers with the UE and a function of setting up peer F1AP layers and SCTP layers with a CU). In other words, in the IAB network, the DU of the access IAB node implements the function of the gNB-DU of the single air interface, and the IAB donor-CU implements a function of a gNB-CU of the single air interface.

On a control plane, a radio resource control (radio resource control, RRC) message is encapsulated in an F1AP message between the access IAB node and the IAB donor-CU for transmission. Specifically, in an uplink direction, the UE1 encapsulates the RRC message in a packet data convergence protocol (packet data convergence protocol, PDCP) protocol data unit (protocol data unit, PDU), and sends the RRC message to the IAB2-DU after processing is sequentially performed at the RLC layer, the MAC layer, and the PHY layer. The IAB2-DU obtains the PDCP PDU after processing is sequentially performed at the PHY layer, the MAC layer, and the RLC layer, encapsulates the PDCP PDU in the F1AP message, and obtains an IP packet after processing is sequentially performed at the SCTP layer and the IP layer. An IAB2-MT sends the IP packet to an IAB3-DU after processing is separately performed at the BAP layer, the RLC layer, the MAC layer, and the PHY layer. The IAB3-DU obtains the IP packet after processing is sequentially performed at the PHY layer, the MAC layer, the RLC layer, and the BAP layer, and then an IAB3-MT sends the IP packet to an IAB1-DU by using an operation similar to that of the IAB2-MT. Similarly, an IAB1-MT sends the IP packet to the IAB donor-DU1. After obtaining the IP packet through parsing, the IAB donor-DU1 sends the IP packet to the IAB donor-CU1. The IAB donor-CU1 obtains the RRC message after processing is sequentially performed on the IP packet at the SCTP layer, the F1AP layer, and the PDCP layer. Operations in a downlink direction are similar. Details are not described herein again.

### User plane protocol stack in the IAB network

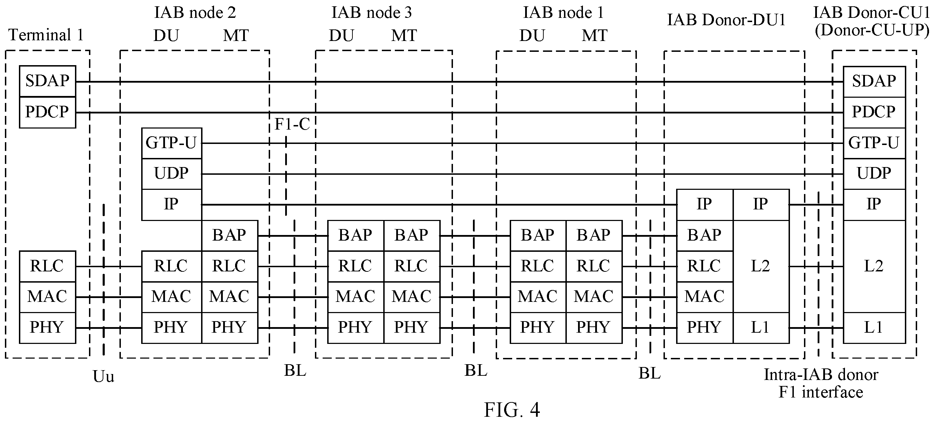

FIG. 4 is a diagram of a user plane protocol stack in an IAB network according to an embodiment of this application. A Uu interface is set up between UE1 and an IAB2-DU, and peer protocol layers include RLC layers, MAC layers, and PHY layers. An F1-U interface is set up between the IAB2-DU and an IAB donor-CU1, and peer protocol layers include general packet radio service (general packet radio service, GPRS) tunneling protocol for the user plane (GPRS tunneling protocol for the user plane, GTP-U) layers and user datagram protocol (user datagram protocol, UDP) layers. An IAB donor-DU1 and the IAB donor-CU1 are connected in a wired manner, and peer protocol layers include IP layers, L2s, and L1s. BLs are set up between an IAB node 2 and an IAB node 3, between the IAB node 3 and an IAB node 1, and between the IAB node 1 and the IAB donor-DU1, and peer protocol layers include BAP layers, RLC layers, MAC layers, and PHY layers. In addition, peer SDAP layers and PDCP layers are set up between the UE1 and the IAB donor-CU1. Peer IP layers are set up between the IAB2-DU and the IAB donor-DU1.

It can be learned that, compared with a user plane protocol stack in a single air interface, in the user plane protocol stack in the IAB network, a DU of an access IAB node implements some functions of a gNB-DU of the single air interface (that is, a function of setting up peer RLC layers, MAC layers, and PHY layers with a terminal and a function of setting up peer GTP-U layers and UDP layers with the IAB donor-CU1). It may be understood that the DU of the access IAB node implements the function of the gNB-DU of the single air interface, and an IAB donor-CU implements a function of a gNB-CU of the single air interface.

On a user plane, a PDCP data packet is encapsulated in a GTP-U tunnel between the access IAB node and the IAB donor-CU for transmission. The GTP-U tunnel is set up on the F1-U interface.

### IP address selection

One donor-CU may be connected to one or more donor-DUs. Each donor-DU allocates one or more IP addresses to an IAB node and sends the IP addresses to the donor-CU. Then, the donor-CU allocates the one or more IP addresses to the IAB node via an RRC message. When the one or more IP addresses are allocated to the IAB node, a BAP address of the donor-DU to which the one or more IP addresses belong needs to be carried, and the IAB node obtains a correspondence between the one or more IP addresses and the BAP address. The BAP address may be used to identify or distinguish the donor-DU.

For an access IAB node, uplink mapping (UL mapping) needs to be performed to send an uplink data packet. The donor-CU configures an uplink mapping rule for the access IAB node via an F1AP message. A BAP routing identifier (BAP routing ID) in the uplink mapping rule includes a BAP address of a destination donor-DU. The access IAB node selects an appropriate source IP address for the uplink data packet based on the BAP address and the foregoing correspondence. In other words, one IP address is selected from one or more IP addresses corresponding to the BAP address.

Similarly, for downlink transmission, when the access IAB node determines a tunnel endpoint identifier (tunnel endpoint identifier, TEID) of a GTP-U tunnel and an IP address, the access IAB node needs to select an appropriate destination IP address for a downlink data packet based on the BAP address of the destination donor-DU that is included in the BAP routing identifier in the uplink mapping rule and the foregoing correspondence, and report the destination IP address to the donor-CU. In other words, one destination IP address is selected from one or more IP addresses corresponding to the BAP address.

### Dual connectivity (dual connectivity, DC) scenario in an IAB architecture

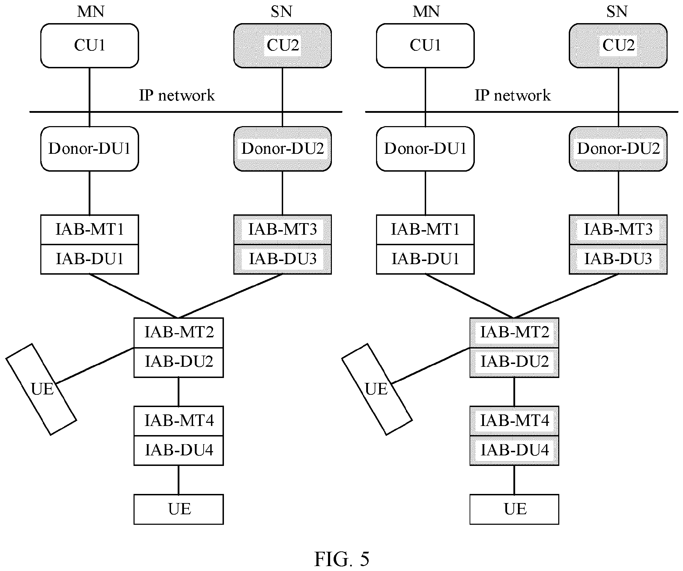

A dual connectivity scenario in an IAB architecture in a 3rd generation partnership project (3^{rd} generation partnership project, 3GPP) release 17 (release 17, R17) standard is mainly a topology redundancy (topology redundancy) architecture as shown in FIG. 5. In FIG. 5, an MT of an IAB node 2, that is, an IAB-MT2, is separately connected to a donor-DU1 and a donor-DU2 through dual connectivity. The IAB node 2 is referred to as a boundary node (boundary node). A topology without shadow is controlled by a donor-CU1, and a topology with shadow is controlled by a donor-CU2.

In the left part of Figure 5, an F1 interface of the IAB node 2 is terminated at the donor-CU1. In other words, the donor-CU1 is an F1-terminating IAB-donor-central unit (F1-terminating IAB-Donor-CU) of the IAB node 2. Accordingly, the topology without shadow is referred to as a F1-terminating topology (F1-terminating topology). The donor-CU2 is a non-F1-terminating IAB-donor-central unit (Non-F1-terminating IAB-Donor-CU) of the IAB node 2. Accordingly, the topology with shadow is referred to as a non-F1-terminating topology (Non-F1-terminating topology).

In the right part of FIG. 5, an F1 interface of the IAB node 2 is terminated at the donor-CU2. In other words, the donor-CU2 is an F1-terminating IAB-donor-central unit of the IAB node 2. Accordingly, the topology with shadow is referred to as an F1-terminating topology. The donor-CU2 is a non-F1-terminating IAB-donor-central unit of the IAB node 2. Accordingly, the topology with shadow is referred to as a non-F1-terminating topology.

The boundary node refers to that the F1 interface and an RRC interface of the IAB node are terminated at different donor-CUs. In other words, an IAB-MT is connected to the donor-CU1 through the RRC, and the IAB-DU1 is connected to the donor-CU2 through the F1 interface. This definition applies to partial migration (partial migration), inter-donor redundancy (inter-donor redundancy), and inter-donor radio link failure (radio link failure, RLF) recovery (inter-donor RLF recovery).

An F1-terminating IAB-donor of a boundary IAB node is an IAB-donor terminated by F1 of the boundary IAB node.

A non-F1-terminating IAB-donor of the boundary IAB node is an IAB-donor having an RRC connection with the boundary node, but the boundary IAB node does not terminate F1 in the IAB-donor.

For uplink traffic (UL traffic) of the boundary node, the boundary node selects a source IP address corresponding to an uplink data packet according to the foregoing IP address selection method.

The donor-DU2 allocates one or more IP addresses, and sends the IP addresses to the donor-CU1 through the donor-CU2, and then the donor-CU1 sends the IP addresses to the boundary node, where the IP address carries a BAP address of the donor-DU2 in a donor-CU2 topology (which is the foregoing topology with shadow). The donor-CU2 may be connected to one or more donor-DU2s, and each donor-DU2 has a unique BAP address in the donor-CU2 topology. However, BAP address of a donor-DU is not unique in different topologies. In other words, a BAP address of the donor-DU2 in the donor-CU2 topology may conflict with a BAP address of the donor-DU1 in a donor-CU1 topology (which is the topology without shadow).

For the problem discussed in the background of this application, this application provides a communication solution. A first node (for example, a boundary node in a dual connectivity scenario) obtains a BAP routing identifier of a data packet and a topology type indicator of a topology that the data packet needs to pass through; and determines a source IP address based on the BAP routing identifier, the topology type indicator, and a correspondence between a topology type and an IP address. In this way, the first node can accurately determine the source IP address. This improves data transmission efficiency.

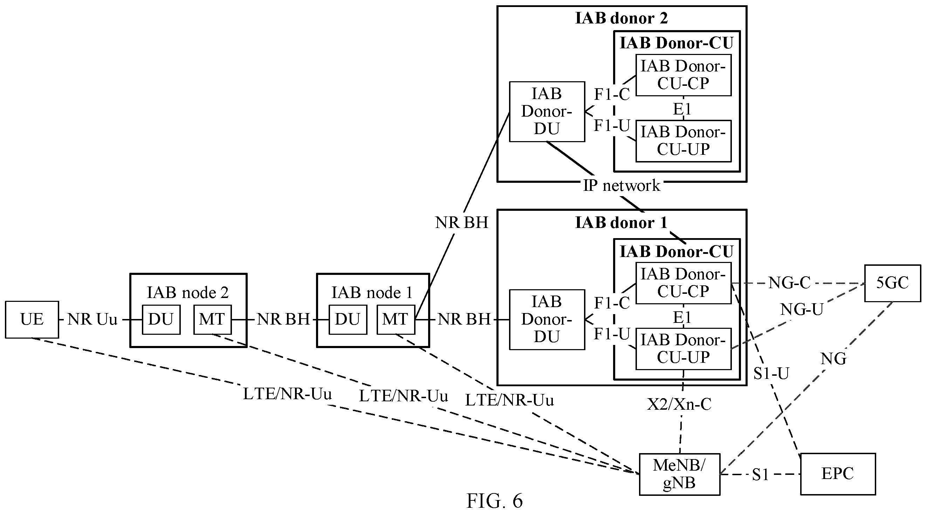

Embodiments of this application are mainly applied to an IAB network, including a standalone IAB network and a non-standalone IAB network. For system architectures in the two networking scenarios, refer to the foregoing descriptions. In the foregoing descriptions, it is mentioned that the IAB node includes the MT part and the DU part, the IAB donor may be further divided into the DU part and the CU part, and the CU may be further divided into the CU-CP part and the CU-UP part. FIG. 6 further shows, based on specific nodes, an example of an architecture in which an IAB node is connected to an IAB donor over a wireless backhaul link.

There is an F1 interface between a DU part of each IAB node and an IAB donor-CU. The F1 interface includes two parts: a control plane part and a user plane part. The user plane part is maintained between an IAB-DU and an IAB donor-CU-UP, and the control plane part is maintained between the IAB-DU and an IAB donor-CU-CP. An F1 interface between the IAB-DU and the IAB donor CU is not shown in FIG. 6.

When the IAB node works in an SA mode, the IAB node may be connected to one parent node or dually connected to two parent nodes. The two parent nodes may be controlled by a same IAB donor or respectively controlled by different IAB donors. An F1 interface needs to be set up between the DU part of the IAB node and the IAB donor, and the IAB donor may be connected to a 5G core network (5G core, 5GC). The IAB-donor-CU-CP is connected to a control plane network element (for example, an access and mobility management function (access and mobility management function, AMF)) in the 5GC through an NG control plane interface, and the IAB-donor-CU-UP is connected to a user plane network element (for example, a user plane function (user plane function, UPF)) in the 5GC through an NG user plane interface.

When the IAB node works in an NSA mode (or an EN-DC mode), the IAB-donor-CU-UP may be connected to an EPC (for example, connected to a serving gateway (serving gateway, SGW)) through an S1 user plane interface, a MeNB (MN eNB) is connected to an MT of the IAB node through an LTE Uu air interface, there is an X2-C interface between the MeNB and the IAB-donor-CU-CP, and the MeNB is connected to the EPC (including an S 1 interface user plane and an S 1 interface control plane) through an S 1 interface.

In another possible case, the MeNB in FIG. 6 may alternatively be replaced with a 5G base station gNB, and the LTE-Uu interface is correspondingly replaced with an NR-Uu interface. The gNB may set up a user plane interface and/or a control plane interface with a 5GC. The gNB and an IAB-donor provide a dual connectivity service for the IAB node. The gNB may serve as a role of a master base station of the IAB node or a role of a secondary base station of the IAB node.

UE in embodiments of this application is a device having a wireless transceiver function. The device may be deployed on land, including an indoor device, an outdoor device, a handheld device, a wearable device, or a vehicle-mounted device; may be deployed on water, for example, on a ship; or may be deployed in air, for example, on an airplane, a balloon, and a satellite. A terminal device may be a mobile phone (mobile phone), a pad (pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. Sometimes, the terminal device is also referred to as user equipment (user equipment, UE), an access terminal device, a UE unit, a mobile station, a remote station, a remote terminal device, a mobile device, a terminal (terminal), a wireless communication device, a UE agent, a UE apparatus, or the like.

The gNB is a base station in a 5G standard. For the UE or the IAB node, the gNB may be a master base station of the IAB node or a secondary base station of the IAB node in a dual connectivity mode.

The 5GC is a 5G core network, which may be configured to perform authentication, mobility management, PDU session management, and the like on the UE. The 5GC includes a functional entity or a network element such as an AMF and a UPF.

It should be noted that the terms "system" and "network" in embodiments of this application may be used interchangeably. "A plurality of" means two or more. In view of this, "a plurality of" may also be understood as "at least two" in embodiments of this application. "And/or" describes an association relationship between associated objects and indicates that three relationships may exist. For example, A and/or B may indicate the following three cases: Only A exists, both A and B exist, and only B exists. In addition, the character "/", unless otherwise specified, generally indicates an "or" relationship between the associated objects.

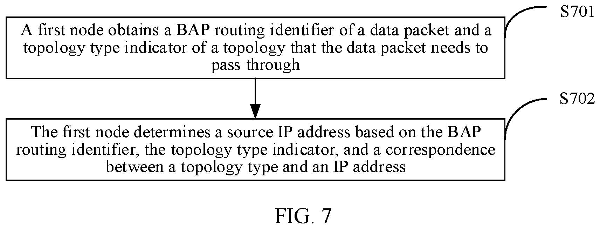

FIG. 7 is a schematic flowchart of a communication method according to an embodiment of this application. For example, the method may include the following steps.

S701: A first node obtains a BAP routing identifier of a data packet and a topology type indicator of a topology that the data packet needs to pass through.

The first node may obtain, from a master node, another node, an operations, administration, and maintenance (operations, administration, and maintenance, OAM), or the like, the BAP routing identifier of the data packet and the topology type indicator of the topology that the data packet needs to pass through.

The BAP routing identifier includes a BAP address of a destination DU. The topology type indicator indicates whether a topology type of the topology that the data packet needs to pass through is an F1-terminating topology or a non-F1-terminating topology.

S702: The first node determines a source IP address based on the BAP routing identifier, the topology type indicator, and a correspondence between the topology type and an IP address.

The first node may pre-store the correspondence between the topology type and the IP address. The correspondence includes an IP address set corresponding to the F1-terminating topology and an IP address set corresponding to the non-F1-terminating topology.

The first node may further obtain IP address sets configured by donor-DUs in different topologies. The IP address sets may include one or more IP addresses. BAP addresses of the donor-DUs in the different topologies may be the same or different. FIG. 1 is still used as an example. It is assumed that an IP address set configured by a donor-DU1 includes {IP1, IP2, IP3}, and an IP address set configured by a donor-DU2 includes {IP4, IP5}.

The first node may determine, based on the BAP address in the BAP routing identifier, an IP address set corresponding to the BAP address.

Because an MN and an SN are respectively corresponding to different topology types, the first node may determine, based on the correspondence between the topology type and the IP address, an IP address set corresponding to the MN and an IP address set corresponding to the SN.

The first node may determine, based on the topology type indicator, to select the source IP address from the IP address set corresponding to the MN or the IP address set corresponding to the SN.

For example, it is assumed that the topology type of the topology that the data packet needs to pass through is determined to be the F1-terminating topology. For example, in FIG. 1, BAP addresses of the donor-DU1 and the donor-DU2 are both X. In this case, the source IP address is selected from the IP address set corresponding to the donor-DU1. For example, IP2 is selected from {IP1, IP2, IP3}.

It is assumed that the topology type of the topology that the data packet needs to pass through is determined to be the non-F1-terminating topology. For example, in FIG. 1, BAP addresses of the donor-DU1 and the donor-DU2 are both X. In this case, the source IP address is selected from the IP address set corresponding to the donor-DU2. For example, IP4 is selected from {IP4, IP5}.

For example, still refer to FIG. 1. The first node needs to send the data packet to the donor-DU2, and the first node selects IP4 as the source IP address. After receiving the data packet, the donor-DU2 parses a packet header of the data packet, and obtains that the source IP address is IP4. In this case, the donor-DU2 may determine that the data packet is sent to the donor-DU2 and does not discard the data packet randomly.

According to the communication method provided in this embodiment of this application, the first node can accurately determine the source IP address. This improves data transmission efficiency.

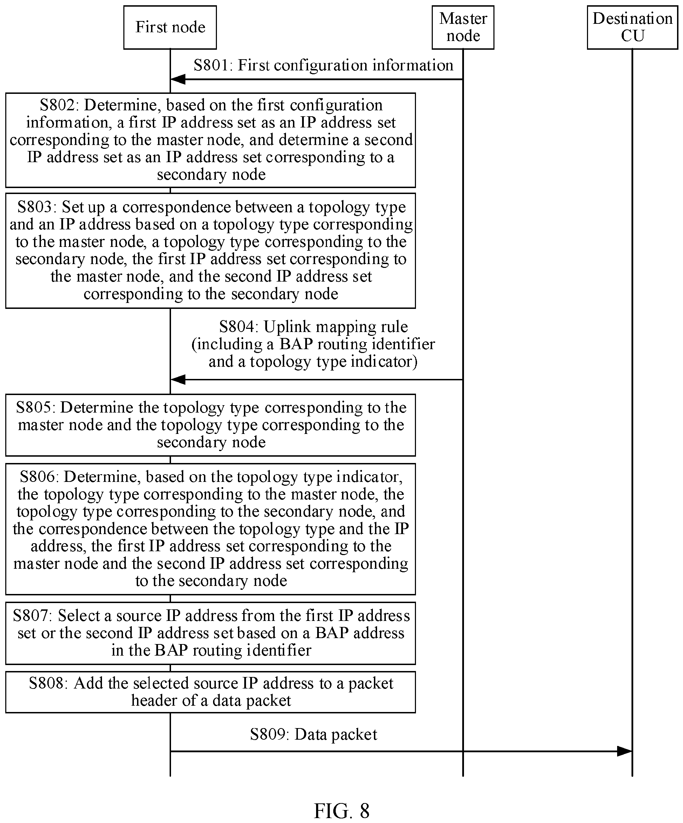

FIG. 8 is a schematic flowchart of another communication method according to an embodiment of this application. The method is applied to an uplink transmission scenario. For example, the method may include the following steps.

S801: A master node sends first configuration information.

Correspondingly, a first node receives the first configuration information.

The dual connectivity architecture shown in the left figure of FIG. 5 is used as an example. The first node may be the boundary node IAB-MT2. The IAB-MT2 is separately connected to the donor-DU1 and the donor-DU2 through dual connectivity. The donor-CU1 is an MN, and the donor-CU2 is an SN.

After a GTP-U tunnel is set up and before data transmission is performed, an available IP address set is configured for the first node.

In a first implementation, a first IP address set allocated by the donor-DU1 to the first node may be configured by the donor-CU1 for the first node, and a second IP address set allocated by the donor-DU2 to the first node may be sent to the donor-CU1 through the donor-CU2, and then configured by the donor-CU1 for the first node.

For example, the donor-CU1 may configure the first IP address set and the second IP address set in one piece of configuration information, or may configure the first IP address set and the second IP address set in different pieces of configuration information. For example, the master node sends the first configuration information. The first configuration information includes a first information element and/or a second information element. The first information element includes the first IP address set, and the second information element includes the second IP address set. The first IP address set and the second IP address set each include one or more IP addresses. FIG. 1 is still used as an example. The first IP address set includes {IP1, IP2, IP3}, and the second IP address set includes {IP4, IP5}.

For example, the first configuration information may be sent via RRC signaling. A signaling structure of the first configuration information is as follows:

```
          {
          {RRCReconfiguration-v1560-IEs::=
               mrdc-SecondaryCellGroupConfig
               radioBearerConfig2
               sk-Counter
               nonCriticalExtension
          }
          {RRCReconfiguration-v1610-IEs::=
               OtherConfig-v1610
               bap-Config-r16
               iab-IP-AddressConfigurationList-r16
          }
          }
```

The first information element is iab-IP-AddressConfigurationList-r16 in RRCReconfiguration, and the second information element is mrdc-SecondaryCellGroupConfig.

The first information element and the second information element may have a same signaling structure as follows:

```
          {IAB-IP-AddressConfiguration-r16::=
               iab-IP-AddressIndex-r16
               iab-IP-Address-r16
               i ab-IP-Usage-r 16
               iab-donor-DU-BAP-Address-r16
          }
```

The first IP address set allocated by the donor-DU1 (which may also be considered as the MN) is included in the first information element, and the second IP address set allocated by the donor-DU2 (which may also be considered as the SN) is included in the second information element.

It can be learned from the foregoing signaling structure of the first information element/second information element that, in addition to the configured IP address set (iab-IP-Address-r16), the first configuration information further includes a BAP address (iab-donor-DU-BAP-Address-r16) of a donor-DU that allocates an IP address. Refer to FIG. 1. A topology in which the donor-DU1 is located is an F1-terminating topology, and a topology in which the donor-DU2 is located is a non-F1-terminating topology. In a same topology, BAP addresses of a plurality of donor-DUs managed by a donor-CU are different. However, in different topologies, BAP addresses of different donor-DUs may be the same. In other words, BAP addresses of the donor-DU1 and the donor-DU2 may be the same or different.

In a second implementation, a first IP address set configured by the donor-DU1 may be sent by the donor-CU1 to the first node, and a second IP address set configured by the donor-DU2 may be sent by the donor-CU2 to the first node without passing through the donor-CU1. In this case, the MN sends the first configuration information to the first node. The first configuration information includes the first IP address set. The first node receives the first configuration information. The SN sends third configuration information to the first node. The third configuration information includes the second IP address set. The first node receives the third configuration information.

S802: The first node determines, based on the first configuration information, the first IP address set as an IP address set corresponding to the master node, and determines the second IP address set as an IP address set corresponding to the secondary node.

In the foregoing first implementation, the first node receives the first configuration information, and the first node may determine, based on the first configuration information, for example, based on an information element name in the first configuration information, the first IP address set in the first information element as an IP address set corresponding to the master node, and determine the second IP address set in the second information element as an IP address set corresponding to the secondary node. For details, refer to Table 1.

**Table 1**

| | |
|---|---|
| MN | First IP address set |
| SN | Second IP address set |

In the foregoing second implementation, when receiving the first configuration information from the MN and the third configuration information from the SN, the first node may determine, based on that the first configuration information is from the MN, the first IP address set included in the first configuration information as the IP address set corresponding to the master node, and determine the second IP address set included in the third configuration information as the IP address set corresponding to the secondary node.

S803: The first node sets up a correspondence between a topology type and an IP address based on a topology type corresponding to the master node, a topology type corresponding to the secondary node, the first IP address set corresponding to the master node, and the second IP address set corresponding to the secondary node.

The first node may further determine the topology type corresponding to the master node and the topology type corresponding to the secondary node. The first node may determine the topology type corresponding to the master node and the topology type corresponding to the secondary node in the following several implementations.

In an implementation, if an F1 interface is first set up and then a DC is set up in an IAB network, it may be determined that the MN is an F1-terminating donor of the first node, and a topology in which the MN is located is an F1-terminating topology. Correspondingly, the SN is a non-F1-terminating donor of the first node, and a topology in which the SN is located is a non-F1-terminating topology.

In another implementation, if a DC is first set up and then an F1 interface is set up in an IAB network, an OAM may send indication information to the first node, where the indication information indicates that the MN or the SN is an F1-terminating donor, and a corresponding topology is an F1-terminating topology.

In still another implementation, if a DC is set up and then an F1 interface is set up in an IAB network, the first node may determine, based on that a default BAP configuration (that is, an information element in which bap config is located) is provided by the MN or the SN, that the MN or the SN is an F1-terminating donor, and a corresponding topology is an F1-terminating topology.

For example, it is assumed that the MN is an F1-terminating donor of the first node, and a corresponding topology is an F1-terminating topology; and the SN is a non-F1-terminating donor of the first node, and a corresponding topology is a non-F1-terminating topology. There is a correspondence shown in Table 2.

**Table 2**

| Node | Topology type |
|---|---|
| MN | F1-terminating topology |
| SN | Non-F1-terminating topology |

After determining the topology type corresponding to the master node and the topology type corresponding to the secondary node, and determining the first IP address set corresponding to the master node and the second IP address set corresponding to the secondary node, the first node may set up the correspondence between the topology type and the IP address. In other words, according to Table 1 and Table 2, a correspondence shown in Table 3 may be obtained.

**Table 3**

| IP address | Topology type |
|---|---|
| First IP address set | F1-terminating topology |
| Second IP address set | Non-F 1-terminating topology |

The first node may locally store the correspondence between the topology type and the IP address, or may store the correspondence between the topology type and the IP address in a cloud server.

S804: The master node sends an uplink mapping rule to the first node.

Correspondingly, the first node receives the uplink mapping rule.

For uplink user plane traffic (UL UP traffic), the master node sends the uplink mapping rule to the first node. The uplink mapping rule includes a BAP routing identifier and a topology type indicator. The BAP routing identifier includes a BAP address of a destination DU. The topology type indicator indicates whether a topology type of a topology that a data packet carrying the BAP routing identifier needs to pass through is the F1-terminating topology or the non-F1-terminating topology.

For example, an F1AP signaling structure of the uplink mapping rule is as follows:

| | |
|---|---|
| UL UP TNL Information to be setup List | |
| | >UL UP TNL Information to Be Setup Item IEs |
| | >>UL UP TNL Information |
| | >>BH Information |

A signaling structure of BH Information is as follows:

| | |
|---|---|
| BH Information | |
| BAP Routing ID | |
| Egress BH RLC CH List | |
| | >Egress BH RLC CH List Item |
| | >>Next-Hop BAP address |
| | >>Egress BH RLC CH ID |
| Non-F1-terminating topology Indicator | |

It can be learned that UL UP TNL Information includes BAP Routing ID and Non-F 1-terminating topology Indicator. Non-F1-terminating topology Indicator is the foregoing topology type indicator.

For uplink non-user plane traffic (UL Non-UP traffic), an F1AP signaling structure of the uplink mapping rule is as follows:

| | |
|---|---|
| Uplink Non-UP Traffic Mapping List | |
| | >Uplink Non-UP Traffic Mapping List Item IEs |
| | >>Non-UP Traffic Type |
| | >>BH Information |

A signaling structure of Non-UP Traffic Type is as follows:

| IE/Group Name | Presence | Range | IE type and reference |
|---|---|---|---|
| Non-UP Traffic Type | M | | ENUMERATED(UE-associated F1AP, non-UE-associated F1AP, non-F1, BAP control PDU, ...) |

BH Information includes BAP Routing ID and the topology type indicator.

S805: The first node determines the topology type corresponding to the master node and the topology type corresponding to the secondary node.

After receiving the uplink mapping rule, the first node may determine, with reference to step S803, the topology type corresponding to the master node and the topology type corresponding to the secondary node.

S806: The first node determines, based on the topology type indicator, the topology type corresponding to the master node, the topology type corresponding to the secondary node, and the correspondence between the topology type and the IP address, the first IP address set corresponding to the master node and the second IP address set corresponding to the secondary node.

After receiving the topology type indicator in the uplink mapping rule, the determined topology type corresponding to the master node and the determined topology type corresponding to the secondary node, and the correspondence between the topology type and the IP address that is determined by the first node shown in Table 3, the first node may determine the first IP address set corresponding to the master node and the second IP address set corresponding to the secondary node.

For example, assuming that the topology type indicator indicates that the topology type of the topology that the data packet needs to pass through is the F1-terminating topology, and the first node determines that the MN corresponds to the F1-terminating topology, the first node may determine, according to Table 3, that the MN corresponds to the first IP address set and the SN corresponds to the second IP address set.

For example, assuming that the topology type indicator indicates that the topology type of the topology that the data packet needs to pass through is the non-F1-terminating topology, and the first node determines that the SN corresponds to the non-F1-terminating topology, the first node may determine, according to Table 3, that the MN corresponds to the first IP address set and the SN corresponds to the second IP address set.

S807: The first node selects a source IP address from the first IP address set or the second IP address set based on the BAP address in the BAP routing identifier.

After determining that the MN corresponds to the first IP address set and the SN corresponds to the second IP address set, the first node may select the source IP address from the first IP address set or the second IP address set based on the BAP address in the BAP routing identifier in the uplink mapping rule.

Because the topology type of the topology that the data packet needs to pass through, the first IP address set corresponding to the MN, and the second IP address set corresponding to the SN have been determined, regardless of whether a BAP address of the donor-DU1 in the F1-terminating topology and a BAP address of the donor-DU2 in the non-F1-terminating topology are the same, it may be determined whether to select the source IP address from the first IP address set or select the source IP address from the second IP address set. Specifically, the IP address may be selected from the determined IP address set randomly, or may be selected based on an algorithm.

For example, it is assumed that the topology type of the topology that the data packet needs to pass through is determined to be the F1-terminating topology. For example, in FIG. 1, BAP addresses of the donor-DU1 and the donor-DU2 are both X. In this case, the source IP address is selected from the first IP address set. For example, IP2 is selected from {IP1, IP2, IP3}.

It is assumed that the topology type of the topology that the data packet needs to pass through is determined to be the non-F1-terminating topology. For example, in FIG. 1, BAP addresses of the donor-DU1 and the donor-DU2 are both X. In this case, the source IP address is selected from the second IP address set. For example, IP4 is selected from {IP4, IP5}.

S808: The first node adds the selected source IP address to a packet header of the data packet.

After selecting the source IP address, the first node adds the selected source IP address to the packet header of the data packet.

The packet header of the data packet may further include the BAP routing identifier, the topology type, and the like.

S809: The first node sends the data packet.

After filling in the packet header of the data packet and modulating the data packet, the first node may send the data packet to a destination CU.

For example, still refer to FIG. 1. The first node needs to send the data packet to the donor-CU2, and the first node selects IP4 as the source IP address. After receiving the data packet, the donor-DU2 parses the packet header of the data packet, and obtains that the source IP address is IP4. In this case, the donor-DU2 may determine that the source IP address is allocated by the donor-DU2, and does not discard or filter out the data packet randomly.

The destination CU may be the MN or the SN.

According to the communication method provided in this embodiment of this application, the first node can accurately determine the source IP address. This improves data transmission efficiency.

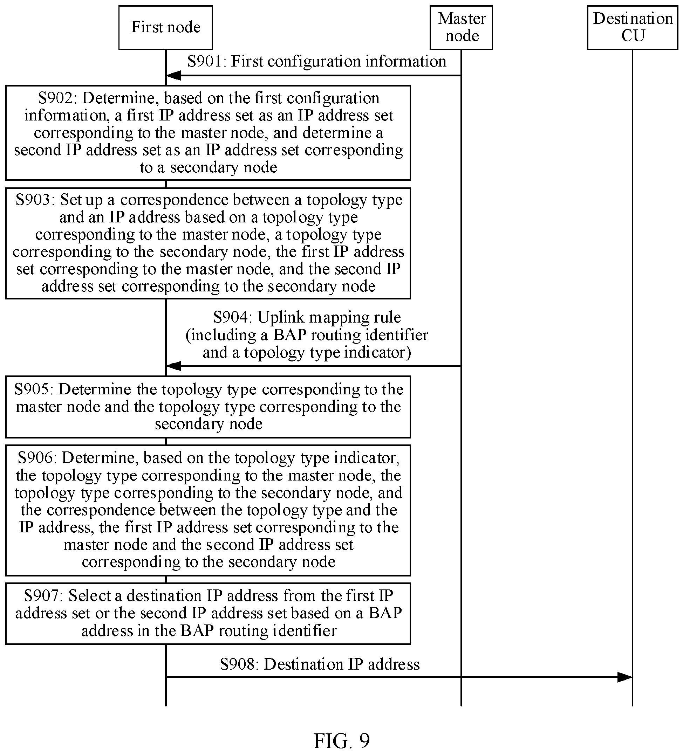

FIG. 9 is a schematic flowchart of still another communication method according to an embodiment of this application. The method is applied to a downlink transmission scenario. For example, the method may include the following steps.

S901: A master node sends first configuration information.

Correspondingly, a first node receives the first configuration information.

For specific implementation of this step, refer to step S801 in the foregoing embodiment. Details are not described herein again.

S902: The first node determines, based on the first configuration information, a first IP address set as an IP address set corresponding to the master node, and determines a second IP address set as an IP address set corresponding to a secondary node.

For specific implementation of this step, refer to step S802 in the foregoing embodiment. Details are not described herein again.

S903: The first node sets up a correspondence between a topology type and an IP address based on a topology type corresponding to the master node, a topology type corresponding to the secondary node, the first IP address set corresponding to the master node, and the second IP address set corresponding to the secondary node.

For specific implementation of this step, refer to step S803 in the foregoing embodiment. Details are not described herein again.

S904: The master node sends an uplink mapping rule to the first node.

Correspondingly, the first node receives the uplink mapping rule.

In a downlink transmission scenario, a GTP-U tunnel needs to be first set up between a donor-CU and the first node. The donor-CU sends a UE context setup/modification request (UE CONTEXT SETUP/MODIFICATION REQUEST) to the first node. An F1AP signaling structure of the UE context setup/modification request is as follows:

| UE CONTEXT SETUP/MODIFICATION REQUEST | | |
|---|---|---|
| | UL UP TNL Information to be setup List | |
| | | >UL UP TNL Information to Be Setup Item IEs |
| | | >>UL UP TNL Information |
| | | >>BH Information |

The first node returns a UE context setup/modification response (UE CONTEXT SETUP/MODIFICATION RESPONSE) to the donor-CU. An F1AP signaling structure of the UE context setup/modification response is as follows:

| UE CONTEXT SETUP/MODIFICATION RESPONSE | | | |
|---|---|---|---|
| | DL UP TNL Information to be setup List | | |
| | | >DL UP TNL Information to Be Setup Item IEs | |
| | | | >>DL UP TNL Information |

A detailed F1AP signaling structure of UL UP TNL Information/DL UP TNL Information is as follows:

| | |
|---|---|
| UP Transport Layer Information(:=UL/DL TNL Information) | |
| CHOICE Transport Layer Information | |
| | >GTP Tunnel |
| | >>Transport Layer Address |
| | >>GTP-TEID |

The donor-CU sends the UE context setup/modification request to the first node, where UL UP TNL Information of the UE context setup/modification request includes an uplink TEID corresponding to the GTP-U tunnel and an IP.

The first node returns the UE context setup/modification response to the donor-CU, where DL UP TNL Information of the UE context setup/modification response includes a downlink TEID corresponding to the GTP-U tunnel and a destination IP address.

For downlink traffic, the master node sends the uplink mapping rule to the first node. The uplink mapping rule includes a BAP routing identifier and a topology type indicator. The BAP routing identifier includes a BAP address of a destination DU. The topology type indicator indicates whether a topology type of a topology that a data packet carrying the BAP routing identifier needs to pass through is an F1-terminating topology or a non-F1-terminating topology.

The first node determines, based on UL UP TNL Information (the uplink TEID corresponding to the GTP-U tunnel and the IP) and corresponding BH Information, a BAP routing identifier corresponding to an uplink of the GTP-U tunnel and a corresponding topology type.

S905: The first node determines the topology type corresponding to the master node and the topology type corresponding to the secondary node.

For specific implementation of this step, refer to step S803 or S805 in the foregoing embodiment. Details are not described herein again.

S906: The first node determines, based on the topology type indicator, the topology type corresponding to the master node, the topology type corresponding to the secondary node, and the correspondence between the topology type and the IP address, the first IP address set corresponding to the master node and the second IP address set corresponding to the secondary node.

For specific implementation of this step, refer to step S806 in the foregoing embodiment. Details are not described herein again.

S907: The first node selects a destination IP address from the first IP address set or the second IP address set based on the BAP address in the BAP routing identifier.

After determining that the MN corresponds to the first IP address set and the SN corresponds to the second IP address set, the first node may select the destination IP address from the first IP address set or the second IP address set based on the BAP address in the BAP routing identifier. Specifically, refer to S807. The destination IP address is selected from the first IP address set or the second IP address set based on the BAP address in the BAP routing identifier. The destination IP address is a downlink destination IP address.

S908: The first node sends the destination IP address.

Before receiving a downlink data packet, the first node needs to report the destination IP address to a destination CU that delivers the data packet. Therefore, the first node sends the selected destination IP address to the destination CU.

The destination CU may be the MN, or may be the SN.

According to the communication method provided in this embodiment of this application, the destination IP address can be accurately determined and the destination IP address can be reported, and the destination CU can accurately send the data packet based on the destination IP address. This improves data transmission reliability.

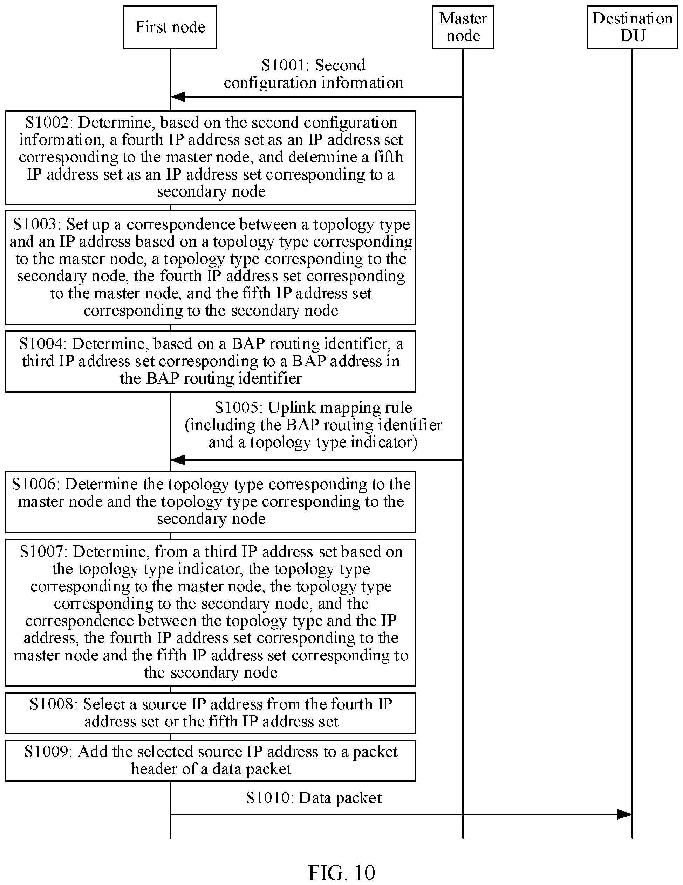

FIG. 10 is a schematic flowchart of still another communication method according to an embodiment of this application. The method is applied to an uplink transmission scenario. For example, the method may include the following steps.

S1001: A master node sends second configuration information.

Correspondingly, a first node receives the second configuration information.

The second configuration information includes a third information element and/or a fourth information element. The third information element includes a fourth IP address set, and the fourth information element includes a fifth IP address set. The fourth IP address set and the fifth IP address set belong to a third IP address set.

For implementation of the second configuration information, refer to the first configuration information in step S801 in the foregoing embodiment. A difference lies in that, it is assumed that a donor-CU1 manages a donor-DU1 and a donor-DU3, a donor-CU2 manages a donor-DU2 and a donor-DU4, the fourth IP address set includes one or more IP addresses allocated by the donor-DU1, and the fifth IP address set includes one or more IP addresses allocated by the donor-DU2. The third IP address set includes the fourth IP address set and the fifth IP address set.

In addition to a configured IP address set, the second configuration information further includes a BAP address of a donor-DU that allocates an IP address.

It is assumed that BAP addresses of the donor-DU1 and the donor-DU2 are the same and both are first BAP addresses. In this case, a correspondence shown in Table 4 is obtained.

**Table 4**

| | |
|---|---|
| First BAP address | Third IP address set |

S1002: The first node determines, based on the second configuration information, the fourth IP address set as an IP address set corresponding to the master node, and determines the fifth IP address set as an IP address set corresponding to a secondary node.

For specific implementation of this step, refer to step S802 in the foregoing embodiment. A correspondence shown in Table 5 is obtained.

**Table 5**

| | |
|---|---|
| MN | Fourth IP address set |
| SN | Fifth IP address set |

S1003: The first node sets up a correspondence between a topology type and an IP address based on a topology type corresponding to the master node, a topology type corresponding to the secondary node, the fourth IP address set corresponding to the master node, and the fifth IP address set corresponding to the secondary node.

For the first node determining the topology type corresponding to the master node and the topology type corresponding to the secondary node, refer to related descriptions in step S803 in the foregoing embodiment, and the correspondence shown in Table 2 may be obtained.

After determining a correspondence between a BAP address and an IP address set, determining the topology type corresponding to the master node and the topology type corresponding to the secondary node, and determining the IP address set corresponding to the master node and the IP address set corresponding to the secondary node, the first node may set up the correspondence between the topology type and the IP address. In other words, according to Table 2 and Table 5, a correspondence shown in Table 6 may be obtained.

**Table 6**

| IP address | Topology type |
|---|---|
| Fourth IP address set | F1-terminating topology |
| Fifth IP address set | Non-F 1-terminating topology |

S1004: The master node sends an uplink mapping rule to the first node.

Correspondingly, the first node receives the uplink mapping rule.

For specific implementation of this step, refer to step S804 in the foregoing embodiment.

S1005: The first node determines, based on a BAP routing identifier, the third IP address set corresponding to a BAP address in the BAP routing identifier.

It is assumed that BAP addresses of the donor-DU1 and the donor-DU2 are the same, which are both first BAP addresses. The BAP routing identifier includes the first BAP address, and the third IP address set corresponds to the first BAP address. In this case, the third IP address set may be determined based on the first BAP address. The third IP address set includes the fourth IP address set and the fifth IP address set.

S1006: The first node determines the topology type corresponding to the master node and the topology type corresponding to the secondary node.

For specific implementation of this step, refer to step S805 in the foregoing embodiment.

S 1007: The first node determines, from the third IP address set based on topology type indicator, the topology type corresponding to the master node, the topology type corresponding to the secondary node, and the correspondence between the topology type and the IP address, the fourth IP address set corresponding to the master node and the fifth IP address set corresponding to the secondary node.

After receiving the topology type indicator in the uplink mapping rule, the first node may determine, according to Table 6, the fourth IP address set corresponding to the master node and the fifth IP address set corresponding to the secondary node.

For example, assuming that the topology type indicator indicates that a topology type of a topology that a data packet needs to pass through is an F 1-terminating topology, and the first node determines that the MN corresponds to the F1-terminating topology, the first node may determine, according to Table 6, that the MN corresponds to the fourth IP address set and the SN corresponds to the fifth IP address set.

For example, assuming that the topology type indicator indicates that a topology type of a topology that a data packet needs to pass through is a non-F 1-terminating topology, and the first node determines that the SN corresponds to the non-F 1-terminating topology, the first node may determine, according to Table 6, that the MN corresponds to the fourth IP address set and the SN corresponds to the fifth IP address set.

S 1008: The first node selects a source IP address from the fourth IP address set or the fifth IP address set.

For specific implementation of this step, refer to step S807 in the foregoing embodiment.

S 1009: The first node adds the selected source IP address to a packet header of the data packet.

For specific implementation of this step, refer to step S808 in the foregoing embodiment.

S1010: The first node sends the data packet.

For specific implementation of this step, refer to step S809 in the foregoing embodiment.

The method in this embodiment is applied to the uplink transmission scenario. The method may also be applied to a downlink transmission scenario. A difference lies in that, S1008 is replaced with that the first node selects a destination IP address from the fourth IP address set or the fifth IP address set, and steps S1009 and S1010 are replaced with that the first node sends the destination IP address.

According to the communication method provided in this embodiment of this application, the first node can accurately determine the source IP address. This improves data transmission efficiency.

It may be understood that, to implement functions in the foregoing embodiment, the first node includes a corresponding hardware structure and/or software module for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

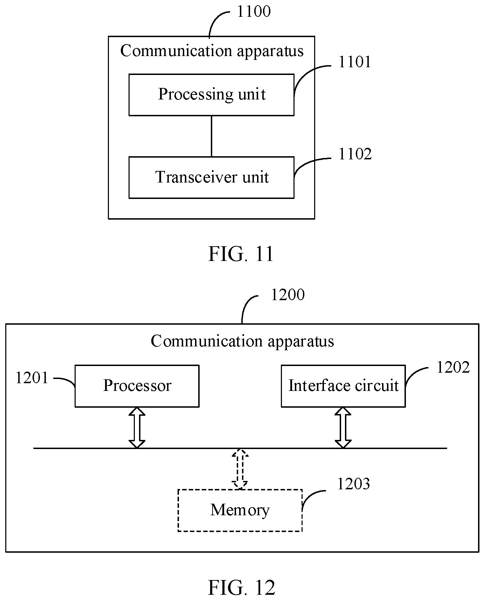

FIG. 11 and FIG. 12 each are a diagram of a possible structure of a communication apparatus according to an embodiment of this application. These communication apparatuses may be configured to implement functions of the first node in the foregoing method embodiments, and therefore can also implement beneficial effects of the foregoing method embodiments.

FIG. 11 is a diagram of a structure of a communication apparatus according to an embodiment of this application. The apparatus 1100 includes a processing unit 1101 and a transceiver unit 1102.

The processing unit 1101 is configured to obtain a BAP routing identifier of a data packet and a topology type indicator of a topology that the data packet needs to pass through. The processing unit 1101 is further configured to determine a source IP address based on the BAP routing identifier, the topology type indicator, and a correspondence between a topology type and an IP address.

Optionally, the processing unit 1101 is further configured to determine a topology type corresponding to a master node and a topology type corresponding to a secondary node. The processing unit 1101 is further configured to determine, based on the topology type indicator, the topology type corresponding to the master node, the topology type corresponding to the secondary node, and the correspondence between the topology type and the IP address, a first IP address set corresponding to the master node and a second IP address set corresponding to the secondary node. The processing unit 1101 is further configured to select the source IP address from the first IP address set or the second IP address set based on a BAP address in the BAP routing identifier.

Optionally, the apparatus further includes the transceiver unit 1102. The transceiver unit 1102 is configured to receive first configuration information. The first configuration information includes a first information element and/or a second information element. The first information element includes the first IP address set, and the second information element includes the second IP address set. The processing unit 1101 is further configured to determine, based on the first configuration information, the first IP address set as an IP address set corresponding to the master node, and determine the second IP address set as an IP address set corresponding to the secondary node.

Optionally, the processing unit 1101 is further configured to set up the correspondence between the topology type and the IP address based on the topology type corresponding to the master node, the topology type corresponding to the secondary node, the first IP address set corresponding to the master node, and the second IP address set corresponding to the secondary node.

Optionally, the processing unit 1101 is further configured to determine, based on the BAP routing identifier, a third IP address set corresponding to a BAP address in the BAP routing identifier. The processing unit 1101 is further configured to determine a topology type corresponding to a master node and a topology type corresponding to a secondary node. The processing unit 1101 is further configured to determine, from the third IP address set based on the topology type indicator, the topology type corresponding to the master node, the topology type corresponding to the secondary node, and the correspondence between the topology type and the IP address, a fourth IP address set corresponding to the master node and a fifth IP address set corresponding to the secondary node. The processing unit 1101 is further configured to select the source IP address from the fourth IP address set or the fifth IP address set.

Optionally, the topology type includes an F1-terminating topology and a non-F1-terminating topology.

Optionally, the processing unit 1101 is further configured to add the selected source IP address to a packet header of the data packet. The transceiver unit 1102 is configured to send the data packet.

Optionally, the processing unit 1101 is further configured to select a destination IP address from the first IP address set or the second IP address set based on the BAP address in the BAP routing identifier. The transceiver unit 1102 is configured to send the destination IP address.

For more detailed descriptions of the processing unit 1101 and the transceiver unit 1102, directly refer to the related descriptions in the method embodiments shown in FIG. 7 to FIG. 10. Details are not described herein again.

As shown in FIG. 12, a communication apparatus 1200 includes a processor 1201 and an interface circuit 1202. The processor 1201 and the interface circuit 1202 are coupled to each other. It may be understood that the interface circuit 1202 may be a transceiver or an input/output interface. Optionally, the communication apparatus 1200 may further include a memory 1203, configured to store instructions executed by the processor 1201, or store input data required by the processor 1201 to run instructions, or store data generated after the processor 1201 runs instructions.

When the communication apparatus 1200 is configured to implement the methods shown in FIG. 7 to FIG. 10, the processor 1201 is configured to implement a function of the foregoing processing unit 1101, and the interface circuit 1202 is configured to implement a function of the foregoing transceiver unit 1102.

When the communication apparatus is a chip used in a first node, the node chip implements a function of the first node in the foregoing method embodiments. The node chip receives information from another module (for example, a radio frequency module or an antenna) in the first node, where the information is sent by another node or UE to the first node; or the node chip sends information to another module (for example, a radio frequency module or an antenna) in the first node, where the information is sent by the first node to another node or UE.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or a storage medium in any other form well-known in the art. For example, the storage medium is coupled to the processor, so that the processor can read information from the storage medium and write information into the storage medium. Certainly, the storage medium may alternatively be a component of the processor. The processor and the storage medium may be located in the ASIC. In addition, the ASIC may be located in the first node. Certainly, the processor and the storage medium may alternatively exist in the first node as discrete components.

An embodiment of this application further provides a communication system, including a master node, a secondary node, a first donor-DU, a second donor-DU, and a first node.

An embodiment of this application further provides a computer-readable storage medium. The computer-readable storage medium stores a computer program or instructions. When the program or the instructions are executed by a processor, the method in the foregoing embodiment is performed.

An embodiment of this application further provides a computer program product. When the computer program product is executed on a computing device, the method in the foregoing embodiments is enabled to be performed.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, a terminal, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
obtaining a backhaul adaptation protocol BAP routing identifier of a data packet and a topology type indicator of a topology that the data packet needs to pass through; and
determining a source IP address based on the BAP routing identifier, the topology type indicator, and a correspondence between a topology type and an internet protocol IP address.

2. The method according to claim 1, wherein the determining a source IP address based on the BAP routing identifier, the topology type indicator, and a correspondence between a topology type and an IP address comprises:
determining a topology type corresponding to a master node and a topology type corresponding to a secondary node;
determining, based on the topology type indicator, the topology type corresponding to the master node, the topology type corresponding to the secondary node, and the correspondence between the topology type and the IP address, a first IP address set corresponding to the master node and a second IP address set corresponding to the secondary node; and
selecting the source IP address from the first IP address set or the second IP address set based on a BAP address in the BAP routing identifier.

3. The method according to claim 1 or 2, wherein the method further comprises:
receiving first configuration information, wherein the first configuration information comprises a first information element and/or a second information element, the first information element comprises the first IP address set, and the second information element comprises the second IP address set; and
determining, based on the first configuration information, the first IP address set as an IP address set corresponding to the master node, and determining the second IP address set as an IP address set corresponding to the secondary node.

4. The method according to claim 3, wherein the method further comprises:
setting up the correspondence between the topology type and the IP address based on the topology type corresponding to the master node, the topology type corresponding to the secondary node, the first IP address set corresponding to the master node, and the second IP address set corresponding to the secondary node.

5. The method according to claim 1, wherein the determining a source IP address based on the BAP routing identifier, the topology type indicator, and a correspondence between a topology type and an IP address comprises:
determining, based on the BAP routing identifier, a third IP address set corresponding to a BAP address in the BAP routing identifier;
determining a topology type corresponding to a master node and a topology type corresponding to a secondary node;
determining, from the third IP address set based on the topology type indicator, the topology type corresponding to the master node, the topology type corresponding to the secondary node, and the correspondence between the topology type and the IP address, a fourth IP address set corresponding to the master node and a fifth IP address set corresponding to the secondary node; and
selecting the source IP address from the fourth IP address set or the fifth IP address set.

6. The method according to any one of claims 1 to 5, wherein the topology type comprises an F1-terminating topology and a non-F1-terminating topology.

7. The method according to any one of claims 1 to 6, wherein the method further comprises:
adding the selected source IP address to a packet header of the data packet, and sending the data packet.

8. The method according to any one of claims 1 to 4, wherein the method further comprises:
selecting a destination IP address from the first IP address set or the second IP address set based on the BAP address in the BAP routing identifier; and
sending the destination IP address.

9. A communication apparatus, wherein the apparatus comprises a processing unit, wherein
the processing unit is configured to obtain a backhaul adaptation protocol BAP routing identifier of a data packet and a topology type indicator of a topology that the data packet needs to pass through; and
the processing unit is further configured to determine a source IP address based on the BAP routing identifier, the topology type indicator, and a correspondence between a topology type and an internet protocol IP address.

10. The apparatus according to claim 9, wherein
the processing unit is further configured to determine a topology type corresponding to a master node and a topology type corresponding to a secondary node;
the processing unit is further configured to determine, based on the topology type indicator, the topology type corresponding to the master node, the topology type corresponding to the secondary node, and the correspondence between the topology type and the IP address, a first IP address set corresponding to the master node and a second IP address set corresponding to the secondary node; and
the processing unit is further configured to select the source IP address from the first IP address set or the second IP address set based on a BAP address in the BAP routing identifier.

11. The apparatus according to claim 9 or 10, wherein the apparatus further comprises a transceiver unit, wherein
the transceiver unit is configured to receive first configuration information, wherein the first configuration information comprises a first information element and/or a second information element, the first information element comprises the first IP address set, and the second information element comprises the second IP address set; and
the processing unit is further configured to determine, based on the first configuration information, the first IP address set as an IP address set corresponding to the master node, and determine the second IP address set as an IP address set corresponding to the secondary node.

12. The apparatus according to claim 11, wherein the processing unit is further configured to set up the correspondence between the topology type and the IP address based on the topology type corresponding to the master node, the topology type corresponding to the secondary node, the first IP address set corresponding to the master node, and the second IP address set corresponding to the secondary node.

13. The apparatus according to claim 9, wherein
the processing unit is further configured to determine, based on the BAP routing identifier, a third IP address set corresponding to a BAP address in the BAP routing identifier;
the processing unit is further configured to determine a topology type corresponding to a master node and a topology type corresponding to a secondary node;
the processing unit is further configured to determine, from the third IP address set based on the topology type indicator, the topology type corresponding to the master node, the topology type corresponding to the secondary node, and the correspondence between the topology type and the IP address, a fourth IP address set corresponding to the master node and a fifth IP address set corresponding to the secondary node; and
the processing unit is further configured to select the source IP address from the fourth IP address set or the fifth IP address set.

14. The apparatus according to any one of claims 9 to 13, wherein the topology type comprises an F1-terminating topology and a non-F1-terminating topology.

15. The apparatus according to any one of claims 9 to 14, wherein
the processing unit is further configured to add the selected source IP address to a packet header of the data packet; and
the transceiver unit is configured to send the data packet.

16. The apparatus according to any one of claims 9 to 12, wherein
the processing unit is further configured to select a destination IP address from the first IP address set or the second IP address set based on the BAP address in the BAP routing identifier; and
the transceiver unit is configured to send the destination IP address.

17. A communication apparatus, comprising a processor, configured to execute a program stored in a memory, wherein when the program is executed, the apparatus is enabled to perform the method according to any one of claims 1 to 8.

18. A communication apparatus, comprising an input/output interface and a logic circuit, wherein
the input/output interface is configured to input a backhaul adaptation protocol BAP routing identifier of a data packet and a topology type indicator of a topology that the data packet needs to pass through; and
the logic circuit is configured to perform the method according to any one of claims 1 to 8.

19. A computer-readable storage medium, storing a computer program, wherein when the computer program is executed by a processor, the method according to any one of claims 1 to 8 is implemented.

20. A computer program product, configured to perform, when executed on a computing device, the method according to any one of claims 1 to 8.
